# EUROPÄISCHE PATENTSCHRIFT

(11) **EP 3 833 968 B1**
(45) Veröffentlichungstag und Bekanntmachung des Hinweises auf die Patenterteilung: **22.02.2023**
(21) Anmeldenummer: 19749266.3
(22) Anmeldetag: 23.07.2019
(51) Int. Cl.: G01N 27/12, G01N 27/22, G01N 27/414

(54) **FEUCHTESENSOR**
MOISTURE SENSOR
CAPTEUR D'HUMIDITÉ

(30) Priorität: 03.09.2018 DE 102018006950
(43) Veröffentlichungstag der Anmeldung: 16.06.2021
(73) Patentinhaber: EWALD DÖRKEN AG, 58313 Herdecke (DE)
(72) Erfinder: HILLERINGMANN, Ulrich, 33181 Bad Wünneberg (DE); PETROV, Dmitry, 33100 Paderborn (DE); MOKANIS, Ilias, 58313 Herdecke (DE); SAND, Henning, 44287 Dortmund (DE)
(74) Vertreter: Weidener, Jörg Michael
(86) Internationale Anmeldenummer: PCT/EP2019/069786
(87) Internationale Veröffentlichungsnummer: WO 2020/048674

(56) Entgegenhaltungen:
- EP-A1- 3 173 778
- WO-A1-2008/052811
- US-A1- 2014 200 538
- US-A1- 2017 138 881

## Beschreibung

Die vorliegende Erfindung betrifft einen Feuchtesensor, der zur Detektion von Feuchtigkeit vorgesehen ist.

Aus der Praxis sind Feuchtesensoren zur Bestimmung der Luftfeuchtigkeit bekannt, diese werden auch als Hygrometer bezeichnet.

Die in der Praxis bekannten Feuchtesensoren benötigen eine externe Energie- bzw. Spannungsversorgung. So ist beispielsweise eine Energieversorgung durch einen Akkumulator oder eine Batterie bekannt. Die bekannten Sensoren sind als passive, analoge und gegebenenfalls digitale Sensoren ausgebildet, so dass eine kontinuierliche Messung der Feuchtigkeit erfolgt. Dies wirkt sich auch auf die Lebensdauer bzw. Benutzungsdauer der Feuchtesensoren aus, die üblicherweise fünf Jahre nicht überschreitet.

Zudem sind auch Sensoren bekannt, die untereinander und mit einer Energieversorgungseinrichtung verkabelt sind.

Gerade beim Einsatz im Dachbereich sind die bekannten Feuchtigkeitssensoren mit einer Vielzahl von Nachteilen behaftet. So müssen in das Dach integrierte Sensoren und/oder deren Energieversorgung (Akkumulator oder Batterie) regelmäßig, insbesondere jährlich, gewechselt und/oder gewartet werden. Zudem ist es bei Verwendung einer Vielzahl von Feuchtesensoren erforderlich, die einzelnen Sensoren über eine Kabelverbindung miteinander zu verbinden und an eine gemeinsame Überwachungseinrichtung anzuschließen. Eine derartige Überwachung der Feuchtigkeit ist nicht nur aufwendig, sondern auch sehr kostenintensiv - und zwar wegen der Installation als auch im Hinblick auf die Betriebskosten, die aus dem Energieverbrauch oder aus der benötigten Wartung resultieren.

In Anbetracht von wirtschaftlichen Aspekten kann ein frühzeitiges Erkennen einer erhöhten Feuchtigkeit im Dachbereich nicht rentabel umgesetzt werden.

Aufgrund der geringen Lebensdauer der Feuchtesensoren und der benötigten dauerhaften Stromversorgung werden diese zumeist im Dachbereich nur dann eingesetzt, wenn ein Neubau oder eine Sanierung des Dachs erfolgt.

Die US 2014/0200538 A1 offenbart einen Flüssigkeitssensor mit einer galvanischen Energiequelle, die dazu eingerichtet ist, ein detektierbares Signal bei Feuchtigkeitsfeststellung auszusenden.

Die WO 2008/052811 A1 betrifft einen RFID-Tag und ein System sowie ein Verfahren, in dem eine Mehrzahl von RFID-Tags eingesetzt werden.

Die US 2017/0138881 A1 betrifft eine Messeinrichtung, die eine integrierte Sensoreinheit umfasst.

Die EP 3 173 778 A1 betrifft einen Feuchtigkeitssensor, der eine galvanische Spannung nutzt.

Aufgabe der vorliegenden Erfindung ist es, die vorgenannten Nachteile zu vermeiden und/oder zu reduzieren. Insbesondere ist es die Aufgabe der vorliegenden Erfindung, die aus der Praxis bekannten Feuchtesensoren hinsichtlich ihrer Nutzungsmöglichkeiten, Handhabung und/oder Anpassbarkeit, insbesondere im Hinblick auf die Verwendung im Dachbereich, zu verbessern.

Die vorgenannte Aufgabe wird erfindungsgemäß gelöst durch einen Feuchtesensor vorgesehen zur Detektion von Feuchtigkeit mit wenigstens zwei Elektroden, wobei eine erste Elektrode zumindest bereichsweise oberflächlich ein erstes Material und eine zweite Elektrode zumindest bereichsweise oberflächlich ein zweites Material aufweist und wobei sich das zweite Material von dem ersten Material unterscheidet, so dass bei Kontakt des ersten Materials und des zweiten Materials mit Feuchtigkeit eine elektrische Spannung entsteht.

Vorteilhafterweise bildet die erste Elektrode eine Anode und die zweite Elektrode eine Kathode bei Kontakt des ersten Materials und des zweiten Materials mit Feuchtigkeit. Zwischen der Anode und der Kathode entsteht eine Spannung, die insbesondere zur Signal- und/oder Alarmgebung und/oder zum Informationstransfer bzw. zur Stromversorgung nutzbar ist. Durch die erst bei Kontakt mit Feuchtigkeit entstehende Spannung ist es möglich, einen Feuchtesensor bereitzustellen, der insbesondere ausschließlich dann detektiert und gegebenenfalls ein entsprechendes Signal aussendet, wenn Feuchtigkeit in Kontakt mit der das erste Material aufweisenden Oberfläche der ersten Elektrode und der das zweite Material aufweisenden Oberfläche der zweiten Elektrode kommt. So ist es möglich, einen aktiven Sensor bereitzustellen, dessen Energiezufuhr durch ihn selbst - nämlich durch das Messprinzip - gewährleistet wird und der keine externe Stromversorgung benötigt. Derartige Sensoren werden als aktive Aufnehmer bezeichnet.

Die zu detektierende Feuchtigkeit kann einen Feuchtigkeitsfilm zumindest bereichsweise auf der Oberfläche, insbesondere auf den das erste und das zweite Material aufweisenden Oberflächenbereichen, bilden und/oder die zu detektierende Feuchtigkeit ist der Feuchtigkeitsfilm.

Insbesondere kann als Feuchtigkeit eine die Elektroden direkt und/oder indirekt miteinander verbindende Flüssigkeit vorgesehen sein. Letztlich kann auch die Feuchtigkeit die Elektroden direkt und/oder indirekt miteinander verbinden.

Unter einer direkten Verbindung der Elektroden über die Feuchtigkeit wird ein durchgehender, insbesondere ununterbrochener, Feuchtigkeitsfilm bzw. eine durchgehende Flüssigkeit verstanden, die die Elektroden direkt bzw. unmittelbar miteinander verbindet. Der Feuchtigkeitsfilm und/oder die Flüssigkeit kann sich letztlich zumindest bereichsweise entlang des zwischen den Elektroden vorhandenen Freiraums erstrecken und/oder zwischen den Elektroden vorgesehen sein. Folglich sind die Elektroden elektrisch beim und/oder nach dem Entstehen einer Spannung über die Feuchtigkeit verbunden.

Als indirekte Verbindung wird hingegen verstanden, dass die das erste Material kontaktierende Feuchtigkeit und/oder der Feuchtigkeitsfilm nicht unmittelbar das zweite Material kontaktiert, wobei das zweite Material auch durch eine Feuchtigkeit und/oder einen Feuchtigkeitsfilm kontaktiert wird, insbesondere so dass kein zumindest bereichsweise sich entlang des Freiraums zwischen den Elektroden erstreckender Feuchtigkeitsfilm vorhanden ist. Die das erste Material und das zweite Material kontaktierenden Feuchtigkeiten sind jedoch miteinander elektrisch leitend verbunden, insbesondere so dass die erste Elektrode elektrisch leitend mit der zweiten Elektrode bei Kontakt des ersten und des zweiten Materials mit Feuchtigkeit verbunden werden kann.

Als zu detektierende Feuchtigkeit ist insbesondere eine auf Wasser basierende Feuchtigkeit vorgesehen. Letztlich versteht es sich, dass auch eine Flüssigkeit mittels des Feuchtesensors detektiert werden kann. Als Flüssigkeit ist insbesondere Wasser vorgesehen.

Ganz besonders bevorzugt ist vorgesehen, dass eine Mehrzahl an Feuchtesensoren, insbesondere im Dachbereich und/oder in einer Gebäudehülle, vorzugsweise angeordnet auf Flachdachbahnen, Dampfbremsen, Fassadenbahnen und/oder Unterdachbahnen, eingesetzt wird, wobei die Feuchtesensoren nicht untereinander verkabelt sind. Jeder Sensor kann sich autark mit Energie versorgen; und zwar nur in dem Fall, wenn auch Feuchtigkeit detektiert wird. Solange keine Feuchtigkeit vorhanden ist, ist der Feuchtesensor sozusagen im "Ruhe-Modus".

Die Feuchtigkeit wirkt wie eine Elektrolytlösung bzw. bildet eine Elektrolytlösung bei Kontakt mit dem ersten Material und dem zweiten Material. Als Elektrolytlösung kann ein flüssiges Material verstanden werden, das bewegliche Ionen und/oder Ladungsträger enthält. Die als Elektrolytlösung wirkende Feuchtigkeit kann - wie zuvor erwähnt - die Elektroden direkt und/oder indirekt derart elektrisch miteinander verbinden, so dass zwischen den Elektroden eine Spannung entstehen kann. Die entstehende Spannung kann anschließend weiter verwendet werden.

Des Weiteren ergibt sich durch den erfindungsgemäßen Feuchtesensor eine sehr wirtschaftliche Methode zur Detektion von Feuchtigkeit, insbesondere im Dachbereich, da Wartungskosten und laufende Betriebskosten entfallen. Zudem ist die Installation des erfindungsgemäßen Feuchtesensors sehr einfach und nur mit geringen Kosten verbunden, da eine Verkabelung des Feuchtesensors bzw. eine Verbindung des Feuchtesensors zu einer externen Energieversorgungseinrichtung und/oder zu den weiteren Feuchtesensoren erfindungsgemäß entfallen kann.

Erfindungsgemäß ist vorgesehen, dass die erste Elektrode aus dem ersten Material bestehen kann und/oder das erste Material zumindest bereichsweise oberflächlich aufweist. Ein bereichsweises oberflächliches Aufweisen ist derart zu verstehen, dass zumindest in einem Oberflächenbereich das Material vorgesehen ist, so dass bei Kontakt mit der Feuchtigkeit eine, insbesondere elektrochemische, Reaktion hervorgerufen wird. Letztlich ist also das erste Material in einem Reaktionsbereich, der oberflächlich auf der Elektrode vorgesehen ist, angeordnet. Zudem können auch mehrere weitere Materialien in der jeweiligen Elektrode vorhanden sein, die insbesondere eine höhere Spannung entstehen lassen und/oder zu dieser beitragen oder die zumindest im Wesentlichen keinen Einfluss auf die zwischen den Elektroden entstehende Spannung haben.

Bei einer besonders bevorzugten Ausführungsform ist vorgesehen, dass die zwei Elektroden ein galvanisches Element bilden und/oder als Bestandteil eines galvanischen Elementes ausgebildet sind. Insbesondere bilden die zwei Elektroden eine Volta-Zelle bzw. eine Volta-Einheit. Als galvanisches Element ist eine Energieumwandlungseinrichtung zu verstehen, die chemische Energie in elektrische Energie umwandelt.

So kann eine Kombination von zwei verschiedenen Elektroden und einer Elektrolytlösung ein galvanisches Element bilden. Das galvanische Element kann als Gleichspannungsquelle dienen. Der charakteristische Wert ist die eingeprägte Spannung. Bei einem galvanischen Element sind die Elektroden elektrisch miteinander über die das erste und/oder das zweite Material kontaktierende Feuchtigkeit verbunden. Bei einem Volta-Element ist vorgesehen, dass die beiden Elektroden direkt über dieselbe, vorzugsweise als Elektrolytlösung ausgebildete, Feuchtigkeit miteinander verbunden sind, insbesondere wobei die Feuchtigkeit den sich zwischen den Elektroden ergebenden Freiraum überbrückt und/oder zumindest bereichsweise ausfüllt. Zwischen den über die Feuchtigkeit elektrisch verbundenen Elektroden entsteht eine elektrische Spannung, die gegebenenfalls einem elektrischen Verbraucher unmittelbar oder mittelbar zuführbar ist.

Der erfindungsgemäße Feuchtesensor bildet erst dann ein galvanisches Element, wenn die Elektroden, insbesondere das erste Material und das zweite Material, in Kontakt mit einer, vorzugsweise als Elektrolytlösung ausgebildeten, Feuchtigkeit kommen. Vorzugsweise kontaktiert die Elektrolytlösung zumindest bereichsweise das erste Material der ersten Elektrode und das zweite Material der zweiten Elektrode, so dass eine Spannung zwischen den Elektroden entstehen kann. Sofern das galvanische Element durch den Feuchtesensor gebildet wird, kann die entstehende Spannung zur Signal- und/oder Alarmgebung genutzt werden.

Die Funktion der galvanischen Zelle beruht auf einer Redoxreaktion. Reduktion und Oxidation laufen räumlich getrennt in und/oder an der ersten und der zweiten Elektrode ab.

Bei der Erfindung sind die Elektroden üblicherweise elektrisch miteinander über die Feuchtigkeit verbunden. Vorzugsweise können voneinander getrennte Feuchtigkeiten durch Verbinden der beiden Halbzellen - d.h. der mit der Feuchtigkeit kontaktierten Elektrode - mit einem Elektronenleiter und/oder einen Ionenleiter elektrisch leitend miteinander verbunden werden, so dass der Stromkreis geschlossen ist. Als Halbzelle kann eine mit einer als Elektrolytlösung ausgebildeten Feuchtigkeit in Kontakt stehende Elektrode verstanden werden.

Die entstehende Spannung hängt insbesondere von der Art des ersten und des zweiten Materials, der Konzentration in der Lösung der jeweiligen Halbzelle, der Ionen, dem pH-Wert sowie der Temperatur ab. Beim Entladen von galvanischen Zellen ist der Minuspol die Anode und der Pluspol die Kathode. An der Kathode findet die Reduktion statt, wobei an der Anode die Oxidation stattfindet.

Die galvanische Zelle liefert letztlich so lange eine Spannung, bis ein elektrochemisches Gleichgewicht erreicht worden ist. Insbesondere entsteht immer dann eine Spannung, wenn sich zwei unterschiedliche Metalle in einer, vorzugsweise als Elektrolytlösung ausgebildeten, Feuchtigkeit befinden. Dies ist insbesondere auf die jeweilige Tendenz der Metalle in Lösung zu gehen und dabei Ionen zu bilden, die so genannte Lösungstension, zurückzuführen. Neben dem Daniell-Element, also Kupfer und Zink aufweisende Elektroden, kann so beispielsweise auch aus Kupfer- und Silberelektroden ein galvanisches Element erzeugt werden.

Die Elektrolytlösung kann durch einen zumindest in der Feuchtigkeit teilweise gelösten Elektrolytbildner gebildet werden. Vorzugsweise weist der Feuchtesensor den Elektrolytbilder auf und/oder der Elektrolytbildner ist dem Feuchtesensor zugeordnet, insbesondere wobei der Elektrolytbildner in der unmittelbaren Umgebung zu den Elektroden und/oder dem Feuchtesensor angeordnet ist. Als Elektrolytbildner wird eine chemische Verbindung verstanden, die im flüssigen oder gelösten Zustand in Ionen dissoziiert ist, die sich unter dem Einfluss eines elektrischen Feldes gerichtet bewegen.

Insbesondere kann vorgesehen sein, dass der Elektrolytbildner den Säureanteil der das erste und/oder das zweite Material kontaktierenden Feuchtigkeit erhöht.

Erfindungsgemäß ist zumindest bereichsweise auf der Oberfläche der ersten Elektrode und/oder der zweiten Elektrode eine Beschichtung vorgesehen. Insbesondere ist die Beschichtung auf dem das erste Material aufweisenden ersten Oberflächenbereich und/oder auf dem das zweite Material aufweisenden zweiten Oberflächenbereich vorgesehen.

Die Beschichtung kann zumindest bereichsweise die Elektrode schützen, nämlich vor Korrosion und/oder mechanischer Belastung. Die Beschichtung ist erfindungsgemäß demzufolge als Korrosionsschutz ausgebildet.

Neben dem Korrosionsschutz ist auch denkbar, dass die Beschichtung zur Bildung einer verbesserten Elektrolytlösung bei Kontakt des ersten Materials und des zweiten Materials mit Feuchtigkeit beiträgt, vorzugsweise indem der Säureanteil und/oder die Konzentration der dissoziierten freien Ladungsträger der Feuchtigkeit erhöht wird. So kann vorgesehen sein, dass die Beschichtung Zitronensäurepulver und/oder ein Oxalessigsäure, Mulonsäure, Glutarsäure, Chinasäure und/oder Vitamin C aufweisendes Pulver aufweist, das sich bei Kontakt mit Feuchtigkeit, insbesondere in der Flüssigkeit, löst.

Die Beschichtung kann ferner mit Wasser mischbar und/oder in Wasser löslich sein. Dies bietet sich insbesondere dann an, wenn die Beschichtung auch oberhalb des ersten Materials und/oder des zweiten Materials angeordnet ist, so dass bei Kontakt der Beschichtung mit Feuchtigkeit auch das erste Material und das zweite Material mit Feuchtigkeit kontaktierbar ist.

Letztlich können durch die Beschichtung verschiedene Möglichkeiten bereitgestellt werden, die insbesondere auch miteinander kombiniert werden können.

Bei einer besonders bevorzugten Ausführungsform ist vorgesehen, dass das erste Material und das zweite Material ein Metall aufweisen. Vorzugsweise sind zwei unterschiedliche Metalle vorgesehen, die bei Kontakt mit Feuchtigkeit eine elektrische Spannung erzeugen.

Die Metalle sind insbesondere ausgewählt aus der elektrochemischen Spannungsreihe, die eine Auflistung der Redox-Paare nach ihrem Standardpotential darstellt. Bei Metallen wird die elektrochemische Spannungsreihe auch Redox-Reihe genannt. Aus der elektrochemischen Spannungsreihe lässt sich das Redox-Verhalten, das insbesondere zu dem Entstehen der elektrischen Spannung beiträgt, ableiten. Jede Redox-Reaktion kann so durch zwei Paare beschrieben werden und aus der elektrochemischen Spannungsreihe lässt sich die Richtung der Reaktion vorhersagen. Das Redox-Potential wiederum ist ein Maß für die Bereitschaft der Ionen, die Elektronen aufzunehmen. Die Ionen der Edelmetalle nehmen bereitwilliger Elektronen als die Ionen unedler Metalle auf.

Die zwischen zwei elektrisch verbundenen Elektroden, die jeweils zwei unterschiedliche Metalle aufweisen, entstehende Spannung ist insbesondere gleich der Differenz der Standardelektrodenpotentiale, die zu den Redox-Paaren in den Elektrodenräumen gehören und in der elektrochemischen Spannungsreihe tabelliert sind. Insbesondere kann so die entstehende Spannung einer galvanischen Zelle bzw. eines galvanischen Elementes bestimmt werden.

Vorzugsweise weist das erste Material ein negatives Standardpotential auf. Insbesondere kann die erste Elektrode als Anode ausgebildet sein, wobei die Anode beim Entladen der galvanischen Zelle den Minuspol bildet.

Zudem kann das zweite Material ein positives Standardpotential aufweisen. Die zweite Elektrode kann wiederum als Kathode ausgebildet sein, wobei die Kathode beim Entladen der galvanischen Zelle den Pluspol bildet.

Besonders bevorzugt ist, dass das erste Material ein unedles Metall aufweist. In diesem Zusammenhang bietet sich insbesondere an, dass das zweite Material ein edles Metall aufweist.

Vorzugsweise beträgt die Differenz der Standardelektrodenpotentiale zwischen 0,01 bis 6 V, bevorzugt zwischen 0,2 bis 4 V, weiter bevorzugt zwischen 1 bis 3 V.

Des Weiteren kann das erste Material Zink und/oder Nickel aufweisen. Insbesondere weist das zweite Material Platin, Silber, Gold, Kupfer und/oder Zinn auf. Besonders bevorzugt ist als Materialkombination des ersten Materials und des zweiten Materials Zink und Gold vorgesehen. Weitere vorteilhafte Materialkombinationen für die erste Elektrode und die zweite Elektrode im Hinblick auf die bei Feuchtigkeit entstehende Spannung sind Zink und Platin, Zink und Silber, Zink und Kupfer, Zink und Nickel und/oder Platin und Nickel. Bei einer Materialkombination von Zink und Nickel ist vorgesehen, dass das erste Material und das zweite Material ein negatives Standardpotential und ein unedles Metall aufweisen. Die vorteilhafte Materialzusammensetzung ergibt sich insbesondere aufgrund der Fähigkeit der Materialien, bei Kontakt mit Feuchtigkeit eine galvanische Zelle zu bilden.

Ganz besonders bevorzugt wird als erstes Material Zink vorgesehen, da Zink bzw. Zinkionen, sehr gut in die als Lösung ausgebildete Feuchtigkeit gehen bzw. übergehen.

Vorzugsweise ist vorgesehen, dass derjenige Oberflächenbereich der ersten Elektrode und/oder der zweiten Elektrode, der das erste Material und/oder das zweite Material aufweist, eine Fläche von 1 mm² bis 100 cm², bevorzugt von 100 mm² bis 50 cm², weiter bevorzugt von 0,1 cm² bis 10 cm², aufweist. Insbesondere liegt das erste Material und/oder das zweite Material auf den vorgenannten Oberflächen zumindest im Wesentlichen gleichverteilt vor.

Die Elektroden können quaderförmig und/oder stabförmig ausgebildet sein. Des Weiteren können die Elektroden als, vorzugsweise dünne, Metallschicht auf einer flexiblen Leiterplatte und/oder einem flexiblen Element aufgebracht worden sein, insbesondere wobei die als Metallschicht ausgebildete Elektrode eine Schichtdicke zwischen 10 nm bis 800 µm, bevorzugt von 100 nm bis 100 µm, aufweist.

Der Abstand zwischen den Elektroden und/oder die Breite des sich zwischen den Elektroden ergebenden Freiraums kann zwischen 0,01 mm bis 20 cm, bevorzugt von 0,1 mm bis 10 cm, weiter bevorzugt von 1 mm bis 5 cm, liegen. Letztlich hängt der Abstand, und damit die Ansprechgeschwindigkeit, vom jeweiligen Einsatzfall ab.

Erfindungsgemäß ist vorgesehen, dass der Feuchtesensor eine Sensorelektronik aufweist, die zum Betrieb mit elektrischer Energie durch die zwischen der ersten Elektrode und der zweiten Elektrode erzeugbaren elektrischen Spannung, vorzugsweise ausschließlich, versorgbar ist. Die vorgenannte elektrische Spannung entsteht letztlich dann, wenn eine Feuchtigkeit detektiert wird, wodurch die Sensorelektronik insbesondere nur bei einer Detektion von Feuchtigkeit mit elektrischer Energie versorgbar ist.

Folglich ist der Feuchtesensor insbesondere als aktiver Sensor ausgebildet, der elektrische Energie selbst erzeugt. Die erzeugte elektrische Energie kann besonders bevorzugt zur Versorgung der Sensorelektronik verwendet werden, insbesondere wobei die erzeugte elektrische Energie als einzige Quelle für elektrische Energie in dem Feuchtesensor vorgesehen ist. Die elektrische Energie wird letztlich aus der chemischen Energie und somit aus der Sensorumgebung gewonnen. Diese Energieumwandlung kann auch als "energy harvesting" (Energie-Ernte) bezeichnet werden.

Des Weiteren weist die Sensorelektronik eine Energiespeichereinrichtungauf. Durch die Energiespeichereinrichtung ist der Feuchtesensor dazu eingerichtet, von den Elektroden stammende elektrische Energie zu speichern, vorzugsweise zu akkumulieren. Eine Akkumulation der elektrischen Energie bietet den Vorteil, dass auch bei einer geringen entstehenden elektrischen Spannung eine ausreichend große elektrische Energie zum Betrieb der Sensorelektronik gewonnen werden kann.

Insbesondere ist als Energiespeichereinrichtung ein Kondensator vorgesehen. Der Kondensator kann zwei elektrisch leitfähige Flächen, die Elektroden des Kondensators, die von einem isolierenden Material, dem Dielektrikum, voneinander getrennt sind, aufweisen. Die Energiespeichereinrichtung kann jedoch auch durch einen Elektrolytkondensator und/oder einen Akkumulator und/oder einen Superkondensator gebildet sein.

Die Energiespeichereinrichtung kann dazu ausgebildet sein, in einem Gleichstromkreis elektrische Ladung und die damit zusammenhängende elektrische Energie statisch zu speichern.

Insbesondere kann die Energiespeichereinrichtung sich durch die zwischen den Elektroden bei Kontakt mit Feuchtigkeit entstehende (Gleich-)Spannung aufladen. Nach dem Anlegen dieser Gleichspannung kann ein monotoner elektrischer Strom fließen, der die Elektroden des Kondensators gegenpolig auflädt, so dass sich im Kondensator eine stetig zunehmende Spannung einstellt.

Das sich aufbauende elektrische Potential auf den Elektroden der Energiespeichereinrichtung lässt im Raum zwischen den Elektroden der Energiespeichereinrichtung ein elektrisches Feld entstehen, dessen Feldstärke zu der aufgebrachten elektrischen Spannung proportional ist.

Vorzugsweise weist die Sensorelektronik eine Spannungserhöhungseinrichtung, insbesondere einen Aufwärtsregler, auf. Die Spannungserhöhungseinrichtung kann mit der Energiespeichereinrichtung und/oder der ersten und der zweiten Elektrode elektrisch verbunden sein, so dass sich die elektrische Spannung erhöht. Vorzugsweise wird die zwischen der ersten und der zweiten Elektrode erzeugte Spannung und/oder die Spannung der Energiespeichereinrichtung erhöht zur Verfügung gestellt.

Die Spannungserhöhungseinrichtung kann demzufolge die unmittelbar bei Kontakt mit Feuchtigkeit entstehende Spannung oder die, vorzugsweise akkumulierte, Spannung der Energiespeichereinrichtung erhöhen. Letztlich ist die Spannungserhöhungseinrichtung derart ausgebildet, dass weitere Bestandteile der Sensorelektronik ausreichend mit elektrischer Energie versorgbar sind.

Die Spannungserhöhungseinrichtung kann insbesondere derart ausgebildet sein, dass die Spannung auf bis zu 10 V, bevorzugt zwischen 1 V und 5 V, weiter bevorzugt zwischen 2 V bis 4 V, hochsetzbar und/oder erhöhbar ist. Die Spannungserhöhungseinrichtung kann letztlich als Hochsteller zur Erzeugung einer Betriebsspannung ausgebildet sein, wobei die Betriebsspannung höher als die Elektrodenspannung ist.

Insbesondere kann als Spannungserhöhungseinrichtung eine Ladungspumpe vorgesehen sein. Unter dem Begriff "Ladungspumpe" werden mehrere unterschiedliche elektrische Schaltungen zusammengefasst, die elektrische Spannungen im Wert vergrößern oder Gleichspannungen in der Polarität umkehren. Erfindungsgemäß wird eine Vergrößerung der elektrischen Spannung vorgesehen. Vorteilhaft an einer Ladungspumpe ist, dass diese ohne magnetische Bauelemente, wie Spulen oder Transformatoren, auskommt. Ganz besonders bevorzugt wird eine als Gleichspannungswandler ausgebildete Ladungspumpe vorgesehen. Ladungspumpen können elektrische Ladung mit Hilfe von elektrischen Kondensatoren transportieren, wobei durch periodische Umschaltung mit Schaltern eine hohe elektrische Ausgangsspannung erzeugt werden kann.

Ferner kann die Sensorelektronik eine Sendeeinrichtung zur drahtlosen Übertragung von Informationen aufweisen. Insbesondere kann die Sendeeinrichtung einen, vorzugsweise aktiven, RFID-Transponder aufweisen. Der RFID-Transponder kann als aktives Tag, insbesondere RFID-Tag, ausgebildet sein. Alternativ oder zusätzlich kann vorgesehen sein, dass die Sendeeinrichtung einen NFC-Sender (Near-Field-Communication-Sender) und/oder GSM-Sender (Global System for Mobile Communication) aufweist.

Vorzugsweise ist die Sendeeinrichtung, insbesondere der aktive RFID-Transponder, derart ausgebildet, dass kein externes Aktivierungssignal, insbesondere von einer Empfangseinrichtung und/oder einem RFID-Lesegerät, zur Übertragung der Informationen benötigt wird. Die Aktivierung erfolgt vorzugsweise, insbesondere automatisch, durch Versorgung mit elektrischer Energie.

Die Sendeeinrichtung kann durch die zwischen den Elektroden entstehende elektrische Spannung zumindest mittelbar versorgt und aktiviert werden. Nach Aktivierung der Sendeeinrichtung kann diese die Informationen, insbesondere drahtlos, übertragen, vorzugsweise über Radiofrequenzwellen.

RFID ist die Abkürzung für radio-frequency identification ("Identifizierung mit Hilfe elektromagnetischer Wellen"). RFID bezeichnet eine Technologie für Sender-Empfänger-Systeme zum automatischen und berührungslosen Identifizieren und/oder Lokalisieren von Objekten und Lebewesen mit Radiowellen. Der RFID-Transponder befindet sich insbesondere am Feuchtesensor und kann eine Antenne, einen analogen Schaltkreis, gegebenenfalls zum Empfangen, zum Senden,einen digitalen Schaltkreis und/oder einen permanenten Speicher aufweisen. Insbesondere ist ein aktiver RFID-Transponder vorgesehen, der seine eigene Energiequelle sowohl für die Versorgung des Mikrochips als auch für das Erzeugen eines modellierten Signals nutzt.

Letztlich kann die Sendeeinrichtung unmittelbar oder mittelbar mit elektrischer Energie durch die zwischen den Elektroden entstehende Spannung versorgt werden.

Die Sendeeinrichtung kann unmittelbar von der zwischen den Elektroden bei Kontakt des ersten und des zweiten Materials mit Feuchtigkeit entstehenden Spannung versorgt werden.

Vorzugsweise wird die Sendeeinrichtung mittelbar von der zwischen den Elektroden bei Kontakt des ersten und des zweiten Materials mit Feuchtigkeit entstehenden Spannung versorgt. Dabei ist die Sendeeinrichtung vorzugsweise von der Energiespeichereinrichtung mit elektrischer Energie versorgbar.

Alternativ oder zusätzlich kann die Sendeeinrichtung zum Betrieb vorzugsweise mit der erhöhten elektrischen Spannung der Spannungserhöhungseinrichtung versorgt werden. Die Spannungserhöhungseinrichtung kann letztlich dazu ausgebildet sein, dass die Sendeeinrichtung zum Betrieb mit der erhöhten elektrischen Spannung ausreichend versorgbar ist.

Insbesondere kann die Sendeeinrichtung durch die, vorzugsweise als Ladungspumpe ausgebildete, Spannungserhöhungseinrichtung und die Energiespeichereinrichtung mit elektrischer Energie versorgt werden.

Des Weiteren kann die Sendeeinrichtung mit elektrischer Energie von den Elektroden in Kombination mit der Energiespeichereinrichtung und/oder der Spannungserhöhungseinrichtung versorgbar sein.

Letztlich wird die Sendeeinrichtung insbesondere nur dann mit elektrischer Energie versorgt, wenn der Feuchtesensor eine Feuchtigkeit detektiert. Wird keine Feuchtigkeit detektiert, wird der Sendeeinrichtung auch keine elektrische Energie zugeführt, so dass die Sendeeinrichtung sozusagen "inaktiv" ist. Eine Aktivierung der Sendeeinrichtung kann letztlich nur dann erfolgen, wenn das erste Material und das zweite Material in Kontakt mit Feuchtigkeit kommen, wodurch eine elektrische Spannung entsteht.

Vorzugsweise erfolgt die Übertragung der Informationen durch die Sendeeinrichtung automatisch. Zudem kann eine Übertragung der Informationen über Funk vorgesehen sein, wobei in diesem Zusammenhang die Sendeeinrichtung als Funksensor ausgebildet ist.

Die Informationen können Ortsdaten und/oder Identifikationsdaten aufweisen. Alternativ oder zusätzlich kann auch vorgesehen sein, dass die Sendeeinrichtung ein akustisches oder visuelles Signal aussendet. Dieses Alarmsignal bzw. dieser Warnton kann zur Signalgebung bzw. zur Informierung über die erfasste Detektion von Feuchtigkeit dienen.

Bei einer weiteren Ausführungsform ist wenigstens eine Elektrode zumindest bereichsweise jeweils in einem Kapselungsmittel eingefasst. Das Kapselungsmittel kann derart ausgebildet sein, dass die wenigstens eine Elektrode vollumfänglich oder zumindest bereichsweise von dem Kapselungsmittel umgeben bzw. in dieses eingekapselt ist. Besonders bevorzugt sind beide Elektroden in einem Kapselungsmittel eingefasst.

Die Wandung des Kapselungsmittels kann insbesondere wenigstens einen, vorzugsweise kapillarförmigen, Durchgang aufweisen. Der Durchgang kann derart ausgebildet sein, dass die auf der außenseitigen Oberfläche des Kapselungsmittels, die der Elektrode abgewandt ist, vorhandene Feuchtigkeit über den Durchgang zu dem ersten Material und/oder dem zweiten Material der ersten Elektrode und/oder der zweiten Elektrode führbar ist. Letztlich kann also über das Kapselungsmittel die Feuchtigkeit gezielt zu denjenigen Oberflächenbereichen der Elektroden geführt werden, die das erste Material und/oder das zweite Material aufweisen. Das Kapselungsmittel kann insbesondere die Elektroden vor mechanischen Beanspruchungen schützen.

Bei einer weiteren Ausführungsform kann vorgesehen sein, dass in dem Feuchtesensor eine Mehrzahl von Elektrodenpaaren jeweils gebildet durch erste und zweite Elektroden vorgesehen ist. Die jeweils eine erste und zweite Elektrode aufweisenden Elektrodenpaare können in Reihe und/oder parallel geschaltet sein, vorzugsweise zur Erhöhung der bei Kontakt des ersten Materials und des zweiten Material mit Feuchtigkeit entstehenden elektrischen Spannung und/oder zur Reduktion des Innenwiderstands. Die Elektrodenpaare können jeweils identisch ausgebildet sein, wobei sie jeweils unterschiedliche erste und/oder zweite Materialien aufweisen.

Darüber hinaus betrifft die vorliegende Erfindung ein System mit einem erfindungsgemäßen Feuchtesensor der vorgenannten Art und einer Empfangseinrichtung, wobei Informationen der Sendeeinrichtung berührungslos an die Empfangseinrichtung übertragbar sind. Vorzugsweise ist hierdurch die Empfangseinrichtung dazu eingerichtet, dass der Feuchtesensor lokalisierbar und/oder identifizierbar ist.

In diesem Zusammenhang versteht es sich, dass das erfindungsgemäße System einen Feuchtesensor aufweisen kann, der gemäß wenigstens einer der vorgenannten bevorzugten Ausführungsformen ausgebildet ist. Insofern beziehen sich alle zuvor beschriebenen Vorteile und bevorzugten Ausführungsformen auch auf das erfindungsgemäße System, so dass zur Vermeidung von unnötigen Wiederholungen an dieser Stelle von weiteren Ausführungen hinsichtlich der vorteilhaften Ausbildung des Feuchtesensors - und des Systems - abgesehen wird.

Das System gewährleistet die Kommunikation der Sendeeinrichtung des Feuchtesensors mit einer, insbesondere externen bzw. räumlich entfernten, Empfangseinrichtung, die nicht an dem Feuchtesensor angeordnet sein muss. Die Sendeeinrichtung überträgt Informationen an die Empfangseinrichtung. Die Informationen können Ortsdaten und/oder Identifikationsdaten aufweisen.

Des Weiteren kann das System als ein RF-System (Radio-Frequency-System) und/oder FID-System (frequency identification), bevorzugt ein aktives RF-System und/oder FID-System, ausgebildet sein, das Informationen über Funk und/oder Radiowellen überträgt.

Beispielsweise kann der Feuchtesensor seinen Ort, vorzugsweise über ein Global-Positioning-System-Signal (GPS-Signal), ermitteln und/oder der Empfangseinrichtung übermitteln.

Alternativ oder zusätzlich ist es denkbar, dass die Sendeeinrichtung einen aktiven RFID-Transponder aufweist, so dass das System als aktives RFID-System ausgebildet ist. Das System überträgt zum einen bei einer Detektion von Feuchtigkeit ein Signal über die Sendeeinrichtung und empfängt zum anderen die Informationen mittels der Empfangseinrichtung.

Vorzugsweise ist in dem System eine Mehrzahl von Feuchtesensoren vorgesehen.

Bevorzugt kann die Empfangseinrichtung ein Zuordnungsmittel zur Auswertung der von der Sendeeinrichtung empfangenen Informationen aufweisen, vorzugsweise so dass anhand der von der Sendeeinrichtung übertragenen Informationen der Feuchtesensor nach Verarbeitung der Informationen mittels des Zuordnungsmittels identifizierbar ist. Insbesondere weist das Zuordnungsmittel hierzu eine Zuordnungstabelle auf.

Durch eine Identifizierung kann eine Lokalisierung erfolgen, so dass durch die Empfangseinrichtung einem Nutzer mitgeteilt werden kann, an welchem Ort der Feuchtesensor angeordnet ist bzw. welcher Feuchtesensor eine Feuchtigkeit detektiert hat. Dies bietet sich insbesondere dann an, wenn eine Vielzahl von Feuchtesensoren eingesetzt wird. Die Feuchtesensoren werden letztlich zur Detektion von Feuchtigkeit in einem vor Feuchtigkeit zu schützenden Bereich, beispielsweise auf einem Dach, verwendet. Dem Nutzer kann also ziel- und zweckgerichtet mitgeteilt werden, welcher Feuchtesensor eine Feuchtigkeit detektiert hat.

Insbesondere kann eine räumliche Distanz bzw. räumlicher Abstand zwischen der Sendeeinrichtung und der Empfangseinrichtung von über 1 m, bevorzugt zwischen 1 m und 100 m, weiter bevorzugt zwischen 2 m und 30 m, insbesondere zwischen 5 m bis 15 m, vorgesehen sein.

Gemäß einem dritten Aspekt betrifft die vorliegende Erfindung ein Verfahren zur Detektion von Feuchtigkeit mit einem erfindungsgemäßen Feuchtesensor der vorgenannten Art, wobei Feuchtigkeit mit dem ersten Material und dem zweiten Material in Kontakt kommt, wodurch eine elektrische Spannung entsteht, die die Sendeeinrichtung unmittelbar oder mittelbar zum Betrieb mit elektrischer Energie versorgt, so dass die Sendeeinrichtung Informationen an die Empfangseinrichtung überträgt.

In diesem Zusammenhang versteht es sich, dass sich bevorzugte Ausführungsformen des Feuchtesensor und/oder des erfindungsgemäßen Systems auch auf das erfindungsgemäße Verfahren anwenden lassen. Zur Vermeidung von unnötigen Wiederholungen sei auf die vorherigen Ausführungen im Hinblick auf die Vorteile und die bevorzugten Ausführungsformen des Feuchtesensors und des erfindungsgemäßen Systems verwiesen.

Bei einer mittelbaren Versorgung der Sendeeinrichtung durch die zwischen den Elektroden entstehende Spannung kann vorgesehen sein, dass die Sensorelektronik eine Energiespeichereinrichtung und/oder eine Spannungserhöhungseinrichtung aufweist, über die die Sendeeinrichtung mit elektrischer Energie versorgbar ist. Bei einer unmittelbaren Versorgung der Sendeeinrichtung mit der elektrischen Spannung ist die Sendeeinrichtung an die Elektroden des Feuchtesensors angeordnet und elektrisch mit diesen verbunden. Die Sendeeinrichtung stellt einen Verbraucher der Sensorelektronik dar, der durch die - aufgrund des Messprinzips - während des Messens bzw. während der Detektion von Feuchtigkeit entstehende elektrische Spannung, insbesondere ausschließlich, versorgbar ist.

Des Weiteren betrifft die vorliegende Erfindung die Verwendung des Feuchtesensors und/oder des Systems zur Leckdetektion und/oder zur Detektion von Feuchtigkeit in Dachbereichen, vorzugsweise bei Flach- und/oder Schrägdächern, und/oder unter einem Bodenbelag und/oder in Nassräumen und/oder zur Dichtigkeitskontrolle von Fassaden.

Die erfindungsgemäße Verwendung zeichnet sich durch eine Langlebigkeit der Sensoren, eine entfallende externe Energieversorgung des Feuchtesensors und eine einfache Methode zur Bestimmung bzw. zur Detektion der Feuchtigkeit aus, die mit vergleichsweise geringen Herstellungs- und/oder Betriebskosten verknüpft ist.

Des Weiteren betrifft die Erfindung eine Verwendung eines Feuchtesensor nach einem der zuvor beschriebenen Ausführungsformen und/oder eines Systems nach einem der zuvor beschriebenen Ausführungsformen zur drahtlosen, insbesondere kabellosen und/oder batterielosen und/oder energieautarken, Detektion von Feuchtigkeit, insbesondere in einer Gebäudehülle, bevorzugt im Fassaden- und/oder Dachbereich.

Im Übrigen versteht es sich, dass in den vorgenannten Intervallen und Bereichsgrenzen jegliche Zwischenintervalle und Einzelwerte enthalten und als erfindungswesentlich offenbart anzusehen sind, selbst wenn diese Zwischenintervalle und Einzelwerte nicht konkret angegeben sind.

Weitere Merkmale, Vorteile und Anwendungsmöglichkeiten der vorliegenden Erfindung ergeben sich aus der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Ansprüchen und deren Rückbeziehung.

Es zeigt:
- Fig. 1: eine schematische Ansicht des erfindungsgemäßen Feuchtesensors,
- Fig. 2: eine schematische Ansicht einer weiteren Ausführungsform des erfindungsgemäßen Feuchtesensors,
- Fig. 3: eine schematische perspektivische Ansicht der erfindungsgemäßen ersten Elektrode,
- Fig. 4: eine schematische perspektivische Ansicht der erfindungsgemäßen zweiten Elektrode,
- Fig. 5: eine schematische Querschnittsansicht einer weiteren Ausführungsform einer erfindungsgemäßen ersten Elektrode,
- Fig. 6: eine schematische Querschnittsansicht einer weiteren Ausführungsform einer erfindungsgemäßen zweiten Elektrode,
- Fig. 7: eine schematische Ansicht eines erfindungsgemäßen Systems,
- Fig. 8: eine schematische Ansicht einer weiteren Ausführungsform des erfindungsgemäßen Systems,
- Fig. 9: eine schematische Darstellung des erfindungsgemäßen Verfahrensablaufs und
- Fig. 10: eine schematische perspektivische Darstellung des erfindungsgemäßen RFID-Transponders.

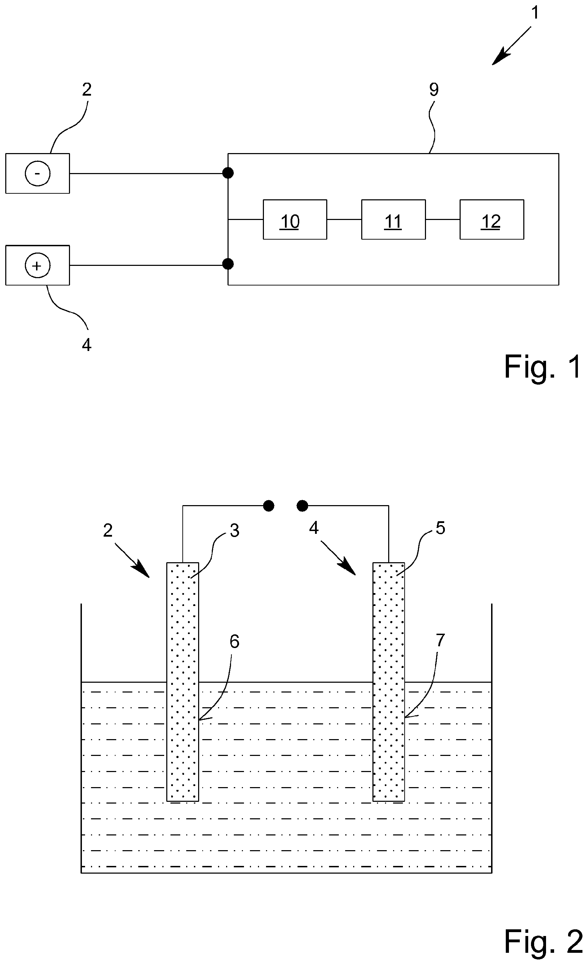

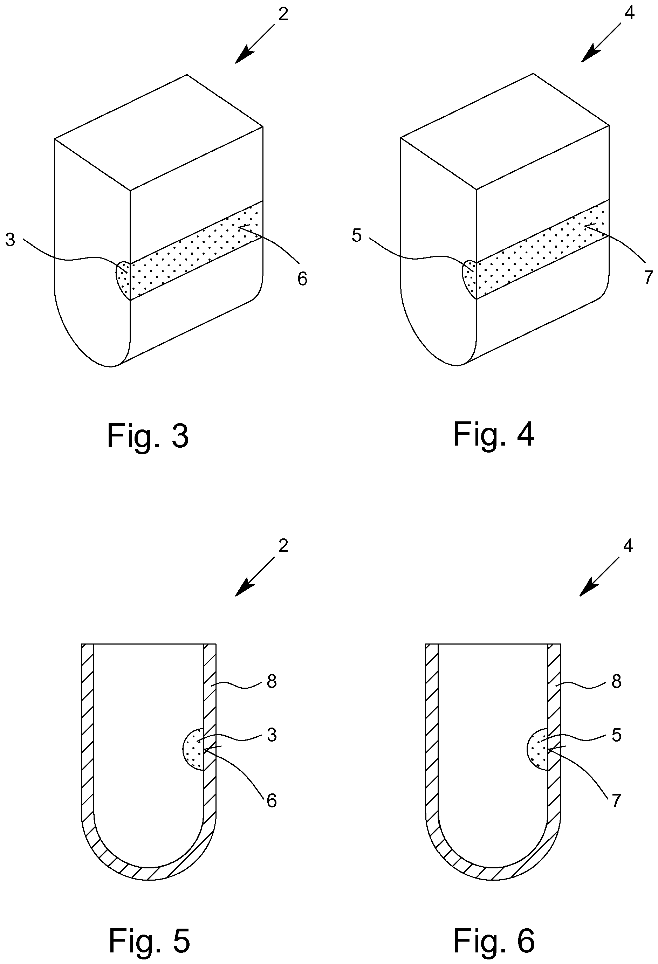

Fig. 1 zeigt einen Feuchtesensor 1 vorgesehen zur Detektion von Feuchtigkeit mit wenigstens zwei Elektroden 2, 4. Die in Fig. 1 dargestellte erste Elektrode 2 ist als Anode und die zweite Elektrode 4 als Kathode ausgebildet. Fig. 3 zeigt, dass die erste Elektrode 2 zumindest bereichsweise oberflächlich ein erstes Material 3 aufweist. Fig. 4 zeigt, dass die zweite Elektrode 4 zumindest bereichsweise oberflächlich ein zweites Material 5 aufweist. Bei den dargestellten Ausführungsformen ist vorgesehen, dass sich das zweite Material 5 von dem ersten Material 3 unterscheidet.

Zudem zeigt Fig. 2, dass bei Kontakt des ersten Materials 3 und des zweiten Materials 5 mit Feuchtigkeit eine elektrische Spannung entsteht. Die Elektroden 2, 4 sind elektrisch miteinander über die Feuchtigkeit verbunden. Die in Fig. 2 dargestellte Feuchtigkeit ist eine Flüssigkeit, die sich zumindest bereichsweise entlang des sich zwischen den Elektroden 2, 4 ergebenden Freiraums erstreckt und/oder diesen überbrückt.

Die Feuchtigkeit kann einen Feuchtigkeitsfilm oberflächlich auf den Elektroden 2, 4 bilden und somit das erste Material 3 und das zweite Material 5 kontaktieren. Als zu detektierende Feuchtigkeit kann Wasser vorgesehen sein.

Fig. 1 zeigt, dass die erste Elektrode 2 und die zweite Elektrode 4 elektrisch mit wenigstens einem Verbraucher verbunden sind.

Bei der in Fig. 1 dargestellten Ausführungsform ist vorgesehen, dass nur dann eine Spannung zwischen der ersten Elektrode 2 und der zweiten Elektrode 4 entsteht, wenn das erste Material 3 der ersten Elektrode 2 und das zweite Material 5 der zweiten Elektrode 4 mit Feuchtigkeit in Kontakt kommen. Weiter zeigen die Fig. 3 und 4, dass das erste Material 3 und das zweite Material 5 nicht nur oberflächlich auf den Elektroden 2, 4 vorgesehen sein können, sondern auch zumindest bereichsweise im Inneren der Elektroden 2, 4.

Des Weiteren zeigt Fig. 2, dass die erste Elektrode 2 aus dem ersten Material 3 und die zweite Elektrode 4 aus dem zweiten Material 5 besteht.

Ferner zeigt Fig. 2, dass die zwei Elektroden 2, 4 ein galvanisches Element bilden und/oder als Bestandteil eines galvanischen Elementes ausgebildet sind. Ein galvanisches Element wird letztlich dann gebildet, wenn das erste Material 3 und das zweite Material 5 in Kontakt mit Feuchtigkeit kommen.

Insbesondere ist die Feuchtigkeit bei Kontakt mit dem ersten Material 3 und dem zweiten Material 5 als Elektrolytlösung ausgebildet.

Fig. 3 zeigt, dass das erste Material 3 der ersten Elektrode 2 nicht auf der gesamten Oberfläche der ersten Elektrode 2 vorgesehen sein muss. In dem in Fig. 3 dargestellten Ausführungsbeispiel ist das erste Material 3 auf einem ersten Oberflächenbereich 6 vorgesehen.

Analog zeigt Fig. 4, dass das zweite Material 5 auf einem zweiten Oberflächenbereich 7 der zweiten Elektrode 4 vorgesehen ist, der sich nicht über die gesamte Oberfläche der zweiten Elektrode 4 erstreckt.

In Fig. 2 ist vorgesehen, dass die erste Elektrode 2 und die zweite Elektrode 4 auf ihrer gesamten Oberfläche jeweils das erste Material 3 das zweite Material 5 aufweisen.

Darüber hinaus zeigt Fig. 5, dass zumindest bereichsweise auf der ersten Elektrode 2 eine Beschichtung 8 vorgesehen ist. Analog zeigt Fig. 6, dass zumindest bereichsweise auf der Oberfläche der zweiten Elektrode 4 eine Beschichtung 8 vorgesehen ist. Die Beschichtung 8 ist außerdem auf dem ersten Oberflächenbereich 6 und dem zweiten Oberflächenbereich 7 vorgesehen.

Nicht dargestellt ist, dass die Beschichtung 8 derart ausgebildet ist, dass sie die Elektroden 2, 4 vor Korrosion und/oder mechanischer Beanspruchung zumindest bereichsweise schützt.

Darüber hinaus kann die Beschichtung 8 in Wasser mischbar bzw. in Wasser lösbar ausgebildet sein.

Ferner kann die Beschichtung 8 auch als Korrosionsbeschichtung ausgebildet sein.

Alternativ oder zusätzlich kann die Beschichtung 8 bei Kontakt mit einer Feuchtigkeit eine Elektrolytlösung gemeinsam mit der Feuchtigkeit bilden und/oder einen, insbesondere in der Feuchtigkeit lösbaren, Elektrolytbildner aufweisen, so dass die zwischen den Elektroden 2, 4 entstehende elektrische Spannung vergrößert werden kann.

Die entstehende elektrische Spannung kann zwischen 0,5 V bis 4 V, bevorzugt zwischen 0,8 V bis 1,3 V, liegen.

Nicht dargestellt ist, dass das erste Material 3 und das zweite Material 5 ein Metall aufweisen. Insbesondere kann das erste Material 3 ein negatives Standardpotential und/oder das zweite Material 5 ein positives Standardpotential aufweisen. Des Weiteren kann das erste Material 3 ein unedles Metall und/oder das zweite Material 5 ein edles bzw. gegenüber dem ersten Material 3, edleren Metall aufweisen. So kann vorgesehen sein, dass für das erste Material 3 Zink und das zweite Material 5 Kupfer eingesetzt wird. Weitere Materialkombinationen des ersten Materials 3 des zweiten Materials 5 sind Zink und Platin, Zink und Gold, Zink und Silber, Zink und Nickel und/oder Nickel und Platin.

Fig. 1 zeigt außerdem, dass der Feuchtesensor 1 eine Sensorelektronik 9 aufweist. Die Sensorelektronik 9 ist zum Betrieb mit elektrischer Energie durch die zwischen der ersten Elektrode 2 und der zweiten Elektrode 4 erzeugbare elektrische Spannung versorgbar.

Zudem ist in Fig. 1 dargestellt, dass die Sensorelektronik 9 eine Energiespeichereinrichtung 10 aufweist. Durch die Energiespeichereinrichtung 10 ist der Feuchtesensor 1 dazu eingerichtet, von den Elektroden 2, 4 stammende elektrische Energie zu speichern. Bei der in Fig. 1 vorgesehenen Ausführungsform wird die elektrische Energie akkumuliert, wobei die Energiespeichereinrichtung 10 als Kondensator ausgebildet ist.

Des Weiteren zeigt Fig. 1, dass die Sensorelektronik 9 eine Spannungserhöhungseinrichtung 11 aufweist. Bei dem dargestellten Ausführungsbeispiel ist die Spannungserhöhungseinrichtung 11 mit der Energiespeichereinrichtung 10 verbunden und wird durch die elektrische Energie der Energiespeichereinrichtung 10 gespeist bzw. mit elektrischer Energie versorgt.

In einer weiteren, nicht dargestellten Ausführungsform ist vorgesehen, dass die Spannungserhöhungseinrichtung 11 unmittelbar mit der ersten und der zweiten Elektrode 2, 4 elektrisch verbunden ist und die Eingangsspannung der Spannungserhöhungseinrichtung 11 die zwischen den Elektroden 2, 4 erzeugbare Spannung ist. Durch die Spannungserhöhungseinrichtung 11 kann die Spannung erhöht werden. Die erhöhte elektrische Spannung kann zum Betrieb weiterer Komponenten der Sensorelektronik 9 verwendet werden. Bei dem in Fig. 1 dargestellten Ausführungsbeispiel ist vorgesehen, dass als Spannungserhöhungseinrichtung 11 eine Ladungspumpe verwendet wird.

Ferner weist die Sensorelektronik 9 gemäß dem in Fig. 1 dargestellten Ausführungsbeispiel eine Sendeeinrichtung 12 zur drahtlosen Übertragung von Informationen auf. Als Informationen können sowohl Identifikationsdaten und/oder Ortsdaten, insbesondere GPS-Signale, vorgesehen sein.

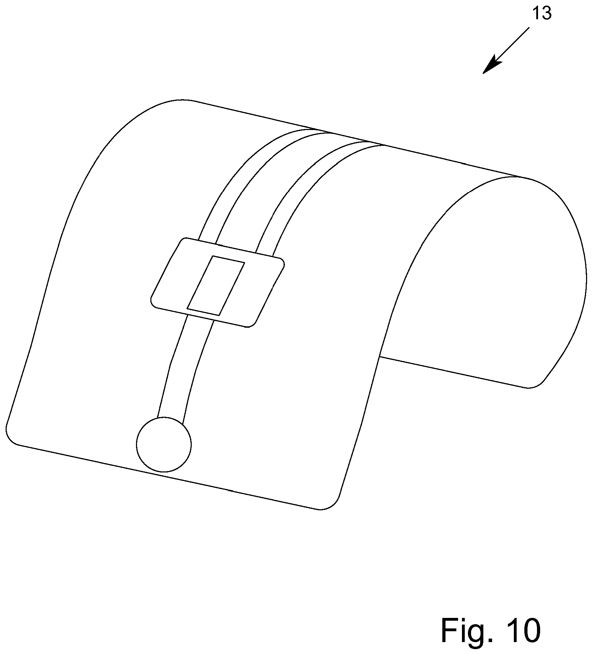

Nicht dargestellt ist, dass die Sendeeinrichtung 12 einen, vorzugsweise aktiven, RFID-Transponder 13 aufweist. Ein RFID-Transponder, der als Sendeeinrichtung 12 verwendet werden kann, ist in Fig. 10 dargestellt. Der in Fig. 10 dargestellte RFID-Transponder 13 ist als flexibles Element ausgebildet, das eine zumindest im Wesentlichen folienartige Struktur aufweist. Auf einer derartigen flexiblen Folie und/oder flexiblen Leiterplatte kann auch die erste Elektrode 2 und die zweite Elektrode 4 gemeinsam mit der Sensorelektronik 9 angeordnet sein.

Ferner ist nicht dargestellt, dass der Abstand zwischen den Elektroden 2, 4 und/oder die Breite des sich zwischen den Elektroden 2, 4 ergebenden Freiraums zwischen 0,01 mm bis 20 cm, bevorzugt zwischen 0,01 mm bis 10 cm, weiter bevorzugt zwischen 1 mm bis 5 cm, liegt.

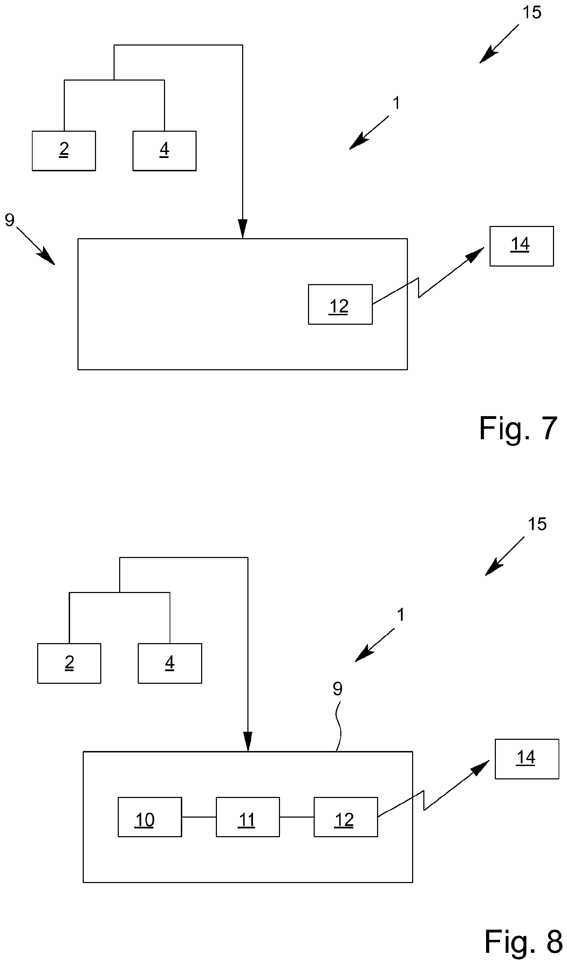

Fig. 7 und 8 zeigen ein System 15 mit einem Feuchtesensor 1 und einer Empfangseinrichtung 14. Die Sendeeinrichtung 12 des Feuchtesensors 1 kann Informationen berührungslos an die Empfangseinrichtung 14 übertragen. Bei der in Fig. 7 und 8 dargestellten Ausführungsform ist vorgesehen, dass die Empfangseinrichtung 14 derart ausgebildet ist, dass der Feuchtesensor 1 lokalisierbar und/oder identifizierbar ist. Bei der in Fig. 7 vorgesehenen Ausführungsform ist die Sendeeinrichtung 12 der Sensorelektronik 9 unmittelbar mit der ersten Elektrode 2 und der zweiten Elektrode 4 verbunden und wird zum Betrieb direkt mit der zwischen der ersten Elektrode 2 und der zweiten Elektrode 4 erzeugbaren elektrischen Spannung versorgt.

In Fig. 8 hingegen ist dargestellt, dass die Sensorelektronik 9 neben der Sendeeinrichtung 12 eine Energiespeichereinrichtung 10 und eine Spannungserhöhungseinrichtung 11 aufweist. Die zwischen den Elektroden 2, 4 bei Detektion von Feuchtigkeit erzeugbare elektrische Spannung wird zunächst an die Energiespeichereinrichtung 10 übertragen, in dieser akkumuliert, und anschließend der Spannungserhöhungseinrichtung 11 zugeführt, die die Spannung erhöht. Die Sendeeinrichtung 12 wird durch die mittels der Spannungserhöhungseinrichtung 11 erhöhte Spannung versorgt.

Nicht dargestellt ist, dass das System 15 als aktives RFID-System ausgebildet ist, wobei die Sendeeinrichtung 12 einen aktiven RFID-Transponder 13 aufweist. Weiter ist nicht dargestellt, dass alternativ ein passives RFID-System vorgesehen ist bzw. sein kann.

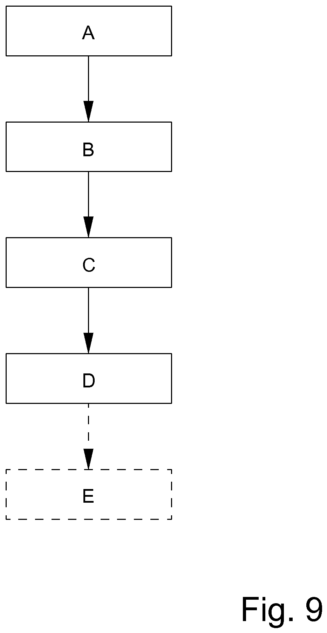

Außerdem zeigt Fig. 9 ein Verfahren zur Detektion von Feuchtigkeit mit einem Feuchtesensor 1. In dem Verfahrensschritt A kommt eine Feuchtigkeit, insbesondere eine Flüssigkeit, mit dem ersten Material 3 der ersten Elektrode 2 und dem zweiten Material 5 der zweiten Elektrode 4 in Kontakt. Die Feuchtigkeit liegt, insbesondere kontaktieren, demgemäß auf dem ersten Oberflächenbereich 6 der ersten Elektrode 2 und dem zweiten Oberflächenbereich 7 der zweiten Elektrode 4 auf.

In Verfahrensschritt B wird durch das Inkontaktkommen des ersten Materials 3 und des zweiten Materials 5 mit der Feuchtigkeit eine elektrische Spannung erzeugt bzw. eine elektrische Spannung entsteht aufgrund einer elektrochemischen Reaktion. Letztlich wird chemische Energie in elektrische Energie umgewandelt.

Zudem ist in Verfahrensschritt C vorgesehen, dass die Sendeeinrichtung 12 unmittelbar oder mittelbar zum Betrieb mit der entstandenen elektrischen Spannung aus Verfahrensschritt B versorgt wird. Bei einer unmittelbaren Versorgung der Sendeeinrichtung 12 ist vorgesehen, dass die Sendeeinrichtung 12 unmittelbar mit der ersten Elektrode 2 und der zweiten Elektrode 4 elektrisch verbunden ist. Bei einem mittelbaren Verbund ist vorgesehen, dass weitere Komponenten der Sensorelektronik 9, wie eine Energiespeichereinrichtung 10 und/oder eine Spannungserhöhungseinrichtung 11, mit der ersten Elektrode 2 und der zweiten Elektrode 4 elektrisch verbunden sind, die anschließend die Sendeeinrichtung 12 mit elektrischer Energie versorgen.

In Verfahrensschritt D ist wiederum vorgesehen, dass die Sendeeinrichtung 12 Informationen, insbesondere Ortsdaten und/oder Identifikationsdaten aufweisende Informationen, überträgt. Es ist möglich, dass die Sendeeinrichtung 12 ein akustisches Signal aussendet. Die Sendeeinrichtung 12 überträgt in Verfahrensschritt D die Informationen an die Empfangseinrichtung 14 des Systems 15.

Schließlich kann optional in Verfahrensschritt E vorgesehen sein, dass die Empfangseinrichtung 14 die durch die Sendeeinrichtung 12 übertragenen Informationen auswertet, insbesondere mittels eines nicht dargestellten Zuordnungsmittels. Durch eine Auswertung über die Empfangseinrichtung 14 kann der Feuchtesensor 1 identifiziert und/oder lokalisiert werden.

Fig. 10 zeigt die als aktiven RFID-Tag bzw. RFID-Transponder 13 ausgebildete Sendeeinrichtung 12 in Art einer flexiblen Folienkonstruktion, vorzugsweise auf einer flexiblen Leiterplatte.

Nicht dargestellt ist, dass der aktive RFID-Tag und/oder die Sendeeinrichtung auf einer rigiden und/oder starren Leiterplatte aufgebracht und/oder an diese angeordnet ist.

Nicht dargestellt ist, dass eine Mehrzahl von ersten Elektroden 2 und zweiten Elektroden 4 für einen Feuchtesensor 1 vorgesehen sein kann, insbesondere wobei die einzelnen Elektrodenpaare (jeweils eine erste Elektrode 2 und eine zweite Elektrode 4) in Reihe und/oder parallel geschaltet sind.

Zudem ist nicht dargestellt, dass eine Verwendung eines Feuchtesensor 1 und/oder eines Systems (15) zur drahtlosen, insbesondere kabellosen und/oder batterielosen und/oder energieautarken, Detektion von Feuchtigkeit, insbesondere in einer Gebäudehülle, bevorzugt im Fassaden- und/oder Dachbereich, vorgesehen ist.

## Patentansprüche

1. Feuchtesensor (1) vorgesehen zur Detektion von Feuchtigkeit, insbesondere im Dachbereich oder in Gebäudehüllen, mit wenigstens zwei Elektroden (2, 4), wobei eine erste Elektrode (2) zumindest bereichsweise oberflächlich ein erstes Material (3) und eine zweite Elektrode (4) zumindest bereichsweise oberflächlich ein zweites Material (5) aufweist, wobei sich das zweite Material (5) von dem ersten Material (3) unterscheidet, so dass bei Kontakt des ersten Materials (3) und des zweiten Materials (5) mit Feuchtigkeit eine elektrische Spannung entsteht, wobei zumindest bereichsweise auf der Oberfläche der ersten Elektrode (2) und/oder der zweiten Elektrode (4) eine Beschichtung (8) vorgesehen ist, wobei die Beschichtung (8) als Korrosionsschutz ausgebildet ist, wobei der Feuchtesensor (1) eine Sensorelektronik (9) aufweist, die zum Betrieb mit elektrischer Energie durch die zwischen der ersten Elektrode (2) und der zweiten Elektrode (4) erzeugbare elektrische Spannung versorgbar ist und wobei die Sensorelektronik (9) eine Energiespeichereinrichtung (10) aufweist, wodurch der Feuchtesensor (1) dazu eingerichtet ist, von den Elektroden (2, 4) stammende elektrische Energie zu speichern.

2. Feuchtesensor nach Anspruch 1, **dadurch gekennzeichnet, dass** die zwei Elektroden (2, 4) ein galvanisches Element bilden und/oder als Bestandteil eines galvanischen Elementes ausgebildet sind.

3. Feuchtesensor nach Anspruch 1 oder 2, **dadurch gekennzeichnet, dass** zumindest bereichsweise auf den das erste Material (3) aufweisenden ersten Oberflächenbereich (6) und/oder das zweite Material (5) aufweisenden zweiten Oberflächenbereich (7) die Beschichtung (8) vorgesehen ist.

4. Feuchtesensor nach einem der vorhergehenden Ansprüche, **dadurch gekennzeichnet, dass** das erste Material (3) und das zweite Material (5) ein Metall aufweisen.

5. Feuchtesensor nach einem der vorhergehenden Ansprüche, **dadurch gekennzeichnet, dass** die Energiespeichereinrichtung (10) als Kondensator ausgebildet ist, wodurch der Feuchtesensor (1) dazu eingerichtet ist, von den Elektroden (2, 4) stammende elektrische Energie zu speichern, nämlich zu akkumulieren.

6. Feuchtesensor nach einem der vorhergehenden Ansprüche, **dadurch gekennzeichnet, dass** die Sensorelektronik (9) eine Spannungserhöhungseinrichtung (11) aufweist, insbesondere wobei die Spannungserhöhungseinrichtung (11) mit der Energiespeichereinrichtung (10) und/oder der ersten und der zweiten Elektrode (2, 4) elektrisch verbunden ist, so dass sich die elektrische Spannung erhöht.

7. Feuchtesensor nach einem der vorhergehenden Ansprüche, **dadurch gekennzeichnet, dass** die Sensorelektronik (9) eine Sendeeinrichtung (12) zur drahtlosen Übertragung von Informationen aufweist, insbesondere wobei die Sendeeinrichtung (12) einen, vorzugsweise aktiven, RFID-Transponder (13) aufweist.

8. Feuchtesensor nach einem der vorhergehenden Ansprüche, **dadurch gekennzeichnet, dass** der Abstand zwischen den Elektroden (2, 4) und/oder die Breite des sich zwischen den Elektroden (2), ergebenden Freiraums zwischen 0,01 mm bis 20 cm, bevorzugt zwischen 0,01 mm bis 10 cm, weiter bevorzugt zwischen 1 mm bis 5 cm, liegt.

9. System (15) mit einem Feuchtesensor (1) nach Anspruch 7 und einer Empfangseinrichtung (14), wobei Informationen der Sendeeinrichtung (12) berührungslos an die Empfangseinrichtung (14) übertragbar sind, vorzugsweise wodurch die Empfangseinrichtung (14) derart ausgebildet ist, dass der Feuchtesensor (1) lokalisierbar und/oder identifizierbar ist.

10. Verfahren zur Detektion von Feuchtigkeit mit einem Feuchtesensor (1) nach Anspruch 7 und mit einem System (15) nach Anspruch 9, wobei Feuchtigkeit mit dem ersten Material (3) und dem zweiten Material (5) in Kontakt kommt, wodurch eine elektrische Spannung entsteht, die die Sendeeinrichtung (12) unmittelbar und/oder mittelbar zum Betrieb mit elektrischer Energie versorgt, so dass die Sendeeinrichtung (12) Informationen an die Empfangseinrichtung (14) übertragt.

11. Verwendung eines Feuchtesensor (1) nach Anspruch 7 und/oder eines Systems (15) nach Anspruch 9 zur drahtlosen, insbesondere kabellosen und/oder batterielosen und/oder energieautarken, Detektion von Feuchtigkeit, insbesondere in einer Gebäudehülle, bevorzugt im Fassaden- und/oder Dachbereich.

## Claims

1. Moisture sensor (1) provided for detecting moisture, in particular in the roof area or in a building envelope, with at least two electrodes (2, 4), wherein a first electrode (2) has a first material (3) at least in regions on its surface and a second electrode (4) has a second material (5) at least in regions on its surface, wherein the second material (5) differs from the first material (3) so that an electrical voltage is produced when the first material (3) and the second material (5) come into contact with moisture, wherein a coating (8) is provided at least in regions on the surface of the first electrode (2) and/or of the second electrode (4), wherein the coating (8) is designed as corrosion protection, wherein the moisture sensor (1) has sensor electronics (9) which, for operation, can be supplied with electrical energy by the electrical voltage which can be generated between the first electrode (2) and the second electrode (4), and the sensor electronics (9) having an energy storage device (10), whereby the moisture sensor (1) is adapted to store electrical energy originating from the electrodes (2, 4).

2. Moisture sensor according to claim 1, **characterized in that** the two electrodes (2, 4) form a galvanic element and/or are formed as a component of a galvanic element.

3. Moisture sensor according to claim 1 or 2, **characterized in that** the coating (8) is provided at least in regions on the first surface region (6) comprising the first material (3) and/or the second surface region (7) comprising the second material (5).

4. Moisture sensor according to one of the preceding claims, **characterized in that** the first material (3) and the second material (5) comprise a metal.

5. Moisture sensor according to one of the preceding claims, **characterized in that** the energy storage device (10) is formed as a capacitor, whereby the moisture sensor (1) is adapted to store, namely to accumulate, electrical energy originating from the electrodes (2, 4).

6. Moisture sensor according to one of the preceding claims, **characterized in that** the sensor electronics (9) comprise a voltage boosting device (11), in particular wherein the voltage boosting device (11) is electrically connected to the energy storage device (10) and/or the first and second electrodes (2, 4) so that the electrical voltage is increased.

7. Moisture sensor according to one of the preceding claims, **characterized in that** the sensor electronics (9) have a transmitting device (12) for the wireless transmission of information, in particular wherein the transmitting device (12) has a, preferably active, RFID transponder (13).

8. Moisture sensor according to one of the preceding claims, **characterized in that** the distance between the electrodes (2, 4) and/or the width of the free space resulting between the electrodes (2) is between 0.01 mm and 20 cm, preferably between 0.01 mm and 10 cm, more preferably between 1 mm and 5 cm.

9. System (15) with a moisture sensor (1) according to claim 7 and a receiving device (14), wherein information from the transmitting device (12) can be transmitted to the receiving device (14) without contact, preferably whereby the receiving device (14) is designed in such a way that the moisture sensor (1) can be located and/or identified.

10. Method of detecting moisture with a moisture sensor (1) according to claim 7 and with a system (15) according to claim 9, wherein moisture comes into contact with the first material (3) and the second material (5), thereby generating an electrical voltage which supplies electrical energy directly and/or indirectly to the transmitting device (12) for operation, so that the transmitting device (12) transmits information to the receiving device (14).

11. Use of a moisture sensor (1) according to claim 7 and/or a system (15) according to claim 9 for wireless, in particular wireless and/or battery-free and/or energy-autonomous, detection of moisture, in particular in a building envelope, preferably in the facade and/or roof area.

## Revendications

1. Capteur d'humidité (1) prévu pour la détection d'humidité, en particulier à la zone du toit ou dans l'enveloppe d'un bâtiment, avec au moins deux électrodes (2, 4), une première électrode (2) présentant au moins par zones en surface un premier matériau (3) et une deuxième électrode (4) présentant au moins par zones en surface un deuxième matériau (5), le deuxième matériau (5) se distinguant du premier matériau (3) de sorte qu'une tension électrique est générée lors du contact du premier matériau (3) et du deuxième matériau (5) avec l'humidité, un revêtement (8) étant prévu au moins par zones sur la surface de la première électrode (2) et/ou de la deuxième électrode (4), le revêtement (8) étant conçu comme une protection contre la corrosion, dans lequel le capteur d'humidité (1) comprend une électronique de capteur (9) qui est apte à être alimentée en énergie électrique par la tension électrique pouvant être générée entre la première électrode (2) et la deuxième électrode (4), et dans lequel l'électronique de capteur (9) comprend un dispositif de stockage d'énergie (10), le capteur d'humidité (1) étant ainsi adapté pour stocker l'énergie électrique provenant des électrodes (2, 4).

2. Capteur d'humidité selon la revendication 1, **caractérisé en ce que** les deux électrodes (2, 4) forment un élément galvanique et/ou sont conçues comme partie intégrante d'un élément galvanique.

3. Capteur d'humidité selon la revendication 1 ou 2, **caractérisé en ce que** le revêtement (8) est prévu au moins par zones sur la première zone de surface (6) présentant le premier matériau (3) et/ou sur la deuxième zone de surface (7) présentant le deuxième matériau (5).

4. Capteur d'humidité selon l'une des revendications précédentes, **caractérisé en ce que** le premier matériau (3) et le deuxième matériau (5) comprennent un métal.

5. Capteur d'humidité selon l'une des revendications précédentes, **caractérisé en ce que** le dispositif de stockage d'énergie (10) est réalisé sous forme de condensateur, ce qui fait que le capteur d'humidité (1) est adapté pour stocker, à savoir accumuler, l'énergie électrique provenant des électrodes (2, 4).

6. Capteur d'humidité selon l'une des revendications précédentes, **caractérisé en ce que** l'électronique de capteur (9) présente un dispositif d'augmentation de la tension (11), en particulier dans lequel le dispositif d'augmentation de la tension (11) est relié électriquement au dispositif de stockage d'énergie (10) et/ou à la première et à la deuxième électrode (2, 4), de sorte que la tension électrique augmente.

7. Capteur d'humidité selon l'une des revendications précédentes, **caractérisé en ce que** l'électronique du capteur (9) présente un dispositif d'émission (12) pour la transmission sans fil d'informations, en particulier dans lequel le dispositif d'émission (12) présente un transpondeur RFID (13), de préférence actif.

8. Capteur d'humidité selon l'une des revendications précédentes, **caractérisé en ce que** la distance entre les électrodes (2, 4) et/ou la largeur de l'espace libre résultant entre les électrodes (2) est comprise entre 0,01 mm et 20 cm, de préférence entre 0,01 mm et 10 cm, de préférence encore entre 1 mm et 5 cm.

9. Système (15) comprenant un capteur d'humidité (1) selon la revendication 7 et un dispositif de réception (14), des informations du dispositif d'émission (12) pouvant être transmises sans contact au dispositif de réception (14), de préférence grâce à quoi le dispositif de réception (14) est conçu de telle sorte que le capteur d'humidité (1) peut être localisé et/ou identifié.

10. Procédé de détection d'humidité avec un capteur d'humidité (1) selon la revendication 7 et avec un système (15) selon la revendication 9, dans lequel l'humidité entre en contact avec le premier matériau (3) et le deuxième matériau (5), ce qui génère une tension électrique qui alimente le dispositif d'émission (12) en énergie électrique directement et/ou indirectement pour le fonctionnement, de sorte que le dispositif d'émission (12) transmet des informations au dispositif de réception (14).

11. Utilisation d'un capteur d'humidité (1) selon la revendication 7 et/ou d'un système (15) selon la revendication 9 pour la détection sans fil, en particulier sans câble et/ou sans batterie et/ou autonome en énergie, de l'humidité, en particulier dans une enveloppe de bâtiment, de préférence dans la zone de la façade et/ou du toit.
